# EUROPÄISCHE PATENTSCHRIFT

(11) **EP 2 512 732 B1**
(45) Veröffentlichungstag und Bekanntmachung des Hinweises auf die Patenterteilung: **09.10.2013**
(21) Anmeldenummer: 11715381.7
(22) Anmeldetag: 17.03.2011
(51) Int. Cl.: B23Q 17/22

(54) **ANORDNUNG ZUM FÜHREN VON WERKZEUGEN**
APPARATUS FOR GUIDING OF TOOLS
APPAREIL DESTINÉS À GUIDER UNE OUTIL

(30) Priorität: 08.04.2010 AT 5642010
(43) Veröffentlichungstag der Anmeldung: 24.10.2012
(73) Patentinhaber: Inova Lisec Technologiezentrum GmbH, 3353 Seitenstetten (AT)
(72) Erfinder: MADER, Leopold, A-3364 Neuhofen/Ybbs (AT)
(74) Vertreter: Beer & Partner Patentanwälte KG
(86) Internationale Anmeldenummer: PCT/AT2011/000134
(87) Internationale Veröffentlichungsnummer: WO 2011/123872

(56) Entgegenhaltungen:
- WO-A1-96/13355
- DE-A1- 10 144 718

## Beschreibung

Die Erfindung betrifft eine Anordnung zum Führen von Werkzeugen, welche die Ränder von plattenförmigen Werkstücken, insbesondere von Glasscheiben, bearbeiten, entlang der Ränder des Werkstückes mit den Merkmalen des einleitenden Teils von Anspruch 1 (DE 101 44 718 A).

Solche Werkzeuge können Schleifscheiben, mit welchen die Ränder von Glastafeln geschliffen und/oder besäumt werden, oder andere Werkzeuge, z.B. Versiegelungsdüsen für Isolierglas, sein, die entlang der Ränder von plattenförmigen Werkstücken bewegt werden, um diese zu bearbeiten.

Üblicherweise werden die plattenförmigen Werkstücke, wie Glasscheiben, in Haltevorrichtungen mit Hilfe von Saugern, Rollen, Stützwalzen und ähnlichem gehalten, und das Bearbeitungswerkzeug entlang der Ränder bewegt. Das Führen von Werkzeugen entlang der Ränder von plattenförmigen Werkstücken ist, auch wenn diese eine unregelmäßige - also vom Rechteck oder Quadrat abweichende - Umrissform haben, ein mit den Mitteln der Technik weitgehend gelöstes Problem.

Problematisch ist es, wenn das plattenförmige Werkstück nicht völlig eben ist, sondern nach der einen und/oder anderen Seite aus der ebenen Stellung abweicht, also "gewölbt" oder "ausgebaucht" ist. Bekannte Werkzeuge, mit welchen die Ränder von plattenförmigen Werkstücken bearbeitet werden, können solchen Abweichungen nicht folgen, sodass sich Schwierigkeiten und Ungenauigkeiten beim Bearbeiten ergeben, weil das Werkzeug gegenüber dem Werkstück nicht mehr richtig ausgerichtet ist.

Die DE 101 44 718 A offenbart eine Anordnung zum Führen von Werkzeugen entlang des plattenförmigen Randes von Werkstücken, wobei eine Tastvorrichtung, die mit dem Werkzeug quer zur Ebene des Werkstückes (durch einen Antrieb) verstellbar ist und wobei die Tastvorrichtung (kapazitiver Sensor) von dem Werkstück einen konstanten Abstand einnimmt.

Eine ähnliche Anordnung zum Führen von Werkzeugen ist aus der WO 96/13355 A bekannt.

Der Erfindung liegt die Aufgabe zu Grunde, hier Abhilfe zu schaffen, indem eine Vorrichtung vorgeschlagen wird, mit welcher Werkzeuge so geführt werden, dass sie gegenüber dem Rand des Werkstückes auch dann ausgerichtet sind, wenn dieses bereichsweise aus der (ebenen) Soll-Lage abweicht.

Gelöst wird diese Aufgabe erfindungsgemäß mit einer Anordnung, welche die Merkmale von Anspruch 1 aufweist.

Bevorzugte und vorteilhafte Ausgestaltungen der Erfindung sind Gegenstand der Unteransprüche.

Da bei der erfindungsgemäßen Anordnung das Werkzeug mit einer Tastvorrichtung verbunden ist, die in definiertem Abstand von einer der Großflächen des Werkstückes gehalten ist, kann das Werkzeug auch dann gegenüber dem Rand des Werkstückes richtig ausgerichtet sein, wenn das Werkstück nach der einen und/oder anderen Seite abweicht, beispielsweise aus der Soll-Lage gewölbt ist und aus der ebenen Lage - der Hauptebene des Werkstückes - abweicht.

Bei der erfindungsgemäßen Anordnung ist die Tastvorrichtung, die mit dem Werkzeug gekuppelt ist, eine Bemoullivorrichtung, die sich unter der Wirkung des Bernoulli-Effektes an eine der Großflächen des Werkstückes mit definiertem Abstand ansaugt. Diese Bernoullivorrichtung ist eine Vorrichtung, die mit einem Fluid, insbesondere einem flüssigen Medium, beaufschlagt wird, wobei das flüssige Medium beispielsweise Wasser ist.

In einer Ausführungsform ist die als Tastvorrichtung vorgesehene Bernoullivorrichtung, mit dem zur Ebene des Werkstückes verstellbar angeordneten Werkzeug gekuppelt, sodass das Werkzeug auch bei wenigstens bereichsweise aus der Soll-Lage abweichendem, beispielsweise gewölbtem, also bereichsweise aus der Ebene abweichendem, Werkstück gegenüber dem Rand des Werkstückes in dem wenigstens einen Bereich, in dem das Werkstück aus der Ebene abweicht, richtig ausgerichtet ist.

In einer Ausführungsform der Erfindung ist die als Tastvorrichtung vorgesehene Bernoullivorrichtung, relativ zum Werkzeug verschwenkbar - bei einer Schleifscheibe beispielsweise um die Achse der Schleifscheibe verschwenkbar - angeordnet, sodass die für das zuverlässige Führen des Werkzeuges jeweils optimale Ausrichtung zwischen Tastvorrichtung und Werkzeug gegenüber dem Werkstück eingestellt werden kann.

Die erfindungsgemäße Anordnung, bei welcher ein den Rand eines plattenförmigen Werkstückes bearbeitendes Werkzeug mit einer als Tastvorrichtung vorgesehenen Bernoullivorrichtung gekuppelt ist, um das Werkzeug gegenüber dem Rand des Werkstückes jeweils in der richtigen, d.h. für das Bearbeiten des Werkstückes optimalen, Ausrichtung zu halten, kann auch bei nach beliebigen Richtungen gewölbten Werkstücken, wie beispielsweise Windschutzscheiben für Fahrzeuge, gekrümmten Glasscheiben für Duschen u.ä., eingesetzt werden, da auch in solchen Fällen die Tastvorrichtung das Werkzeug immer in der richtigen Lage gegenüber dem Rand bzw. der Fläche des Werkstückes ausgerichtet führt.

Weitere Merkmale und Einzelheiten der Erfindung ergeben sich aus der nachstehenden Beschreibung eines bevorzugten Ausführungsbeispieles anhand der Zeichnung.

Es zeigt:
Fig. 1 teilweise schematisiert und in Schrägansicht eine erfindungsgemäße Anordnung,
Fig. 2 im Schnitt die Tastvorrichtung mit ihrer Halterung, jedoch ohne Werkzeug von Fig. 1 und
Fig. 3 schematisiert die Verwendung der erfindungsgemäßen Anordnung.

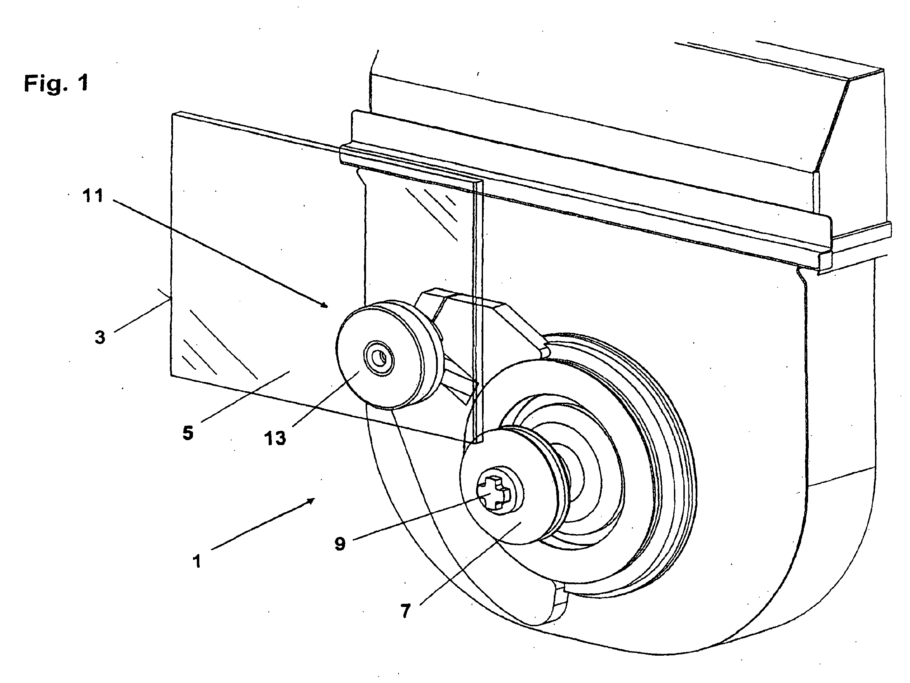

Bei dem in Fig. 1 gezeigten Ausführungsbeispiel dient die erfindungsgemäße Anordnung 1 zum Schleifen (Besäumen) der Ränder 3 einer Glasscheibe 5, indem diese mit einer Nutenschleifscheibe 7 bearbeitet werden. Die Nutenschleifscheibe 7 ist auf einer Spindel 9 angeordnet und mit einem nicht näher gezeigten Antrieb gekuppelt.

Durch in Fig. 1 ebenfalls nicht näher gezeigte und im Stand der Technik bekannte Führungseinrichtungen wird die Schleifscheibe 7 so bewegt, dass sie sich entlang des Randes 3 des im gezeigten Ausführungsbeispiel rechteckigen Werkstückes in Form einer Glasscheibe 5 bewegt, um dessen Ränder 3 zu bearbeiten, z.B. zu schleifen und/oder zu besäumen.

Dabei wird weiters angenommen, dass die Glasscheibe 5 durch nicht gezeigte Halteeinrichtungen, wie Sauger, Stützrollen und ähnliches, gehalten wird.

Beispielsweise wird die Nutenschleifscheibe 7 des Werkzeuges um die zu bearbeitende Glasscheibe 5 bewegt, indem die Nutenschleifscheibe 7 auf und ab und die Glasscheibe 5 horizontal hin und her bewegt wird. Durch Kombination der vertikalen und der horizontalen Bewegungen kann das Werkzeug entlang beliebig geformter Ränder 3 von Werkstücken bewegt werden.

Um das Werkzeug, im gezeigten Ausführungsbeispiel die Schleifscheibe 7, gegenüber dem Rand 3 der zu bearbeitenden Glasscheibe 5 jeweils richtig auszurichten - d.h. gegenüber einer zur Ebene der Glasscheibe 5 parallelen Mittelebene der Glasscheibe 5 ("Soll-Lage") ausgerichtet so zu halten, dass die Mittelebene der Schleifscheibe 7 mit der Mittelebene des Werkstückes (Glasscheibe 5) fluchtet, also in einer Ebene liegen - ist mit dem Werkzeug 7 eine Tastvorrichtung 11 verbunden, die zusammen mit dem Werkzeug 7 in Richtung der Achse des Werkzeuges 7 (d.h. normal zur Ebene der Glasscheibe 5) verstellbar angeordnet ist.

Die Tastvorrichtung 11 ist im eine Tastvorrichtung 11 mit einer Bernoullischeibe 13. Die Bernoullischeibe 13 besitzt in ihrer der Glasscheibe 5 zugekehrten Fläche 15 eine ringförmige Düse 17 für den Austritt eines Fluids, im gezeigten Ausführungsbeispiel Wasser. Durch den Austritt von Wasser aus der Ringdüse 17 wird die Bernoullischeibe 13 als Tastvorrichtung in definiertem Abstand von der Glasscheibe 5 gehalten (eben durch die Bernoullikräfte), sodass auch die Schleifscheibe 7, also das (Bearbeitungs-)Werkzeug, gegenüber der Glasscheibe 5 stets richtig ausgerichtet ist, um deren Rand 3 zuverlässig und ohne Abweichungen nach der einen oder der anderen Seite der Mittelebene der Glasscheibe 5 zu bearbeiten. Dies auch, wenn die Glasscheibe 5 - aus welchem Grund auch immer - nicht gerade verlaufende Ränder 3 aufweist, also aus der Soll-Lage abweicht, z.B. im Randbereich, zur einen oder zur anderen Seite hin gewölbt ist, also aus der (Mittel)Ebene der Glasscheibe 5 abweicht.

Der Ringdüse 17 in der Bernoullischeibe 13 wird Wasser über eine Leitung 19 zugeführt.

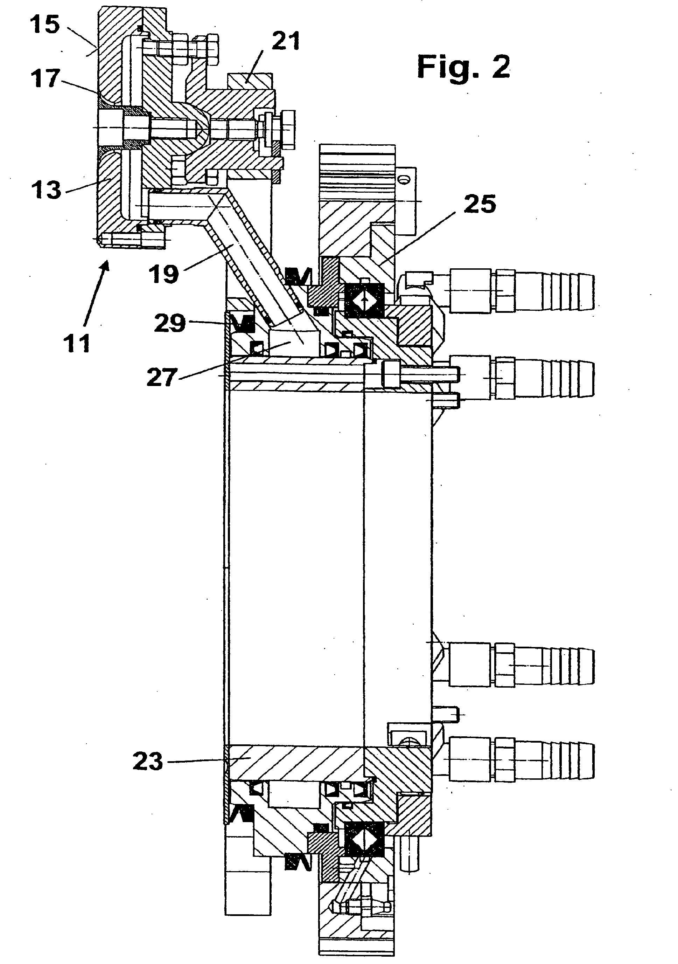

Aus Fig. 2 ist auch ersichtlich, dass die Halterung 21 für die Bernoullischeibe 13 an einem ringförmigen Bauteil 23 befestigt ist, der gegenüber dem Grundkörper 25 verdrehbar ist. Dabei ist der Kanal 27, über welchen Wasser der Düse 17 in der Bernoullischeibe 13 zugeführt wird, durch mehrere Dichtungen 29 gegenüber dem feststehenden Grundkörper 25 abgedichtet.

Der Träger 21 für die Bernoullischeibe 13 ist in der Vorrichtung um die Achse der Schleifscheibe 7 bzw. ihrer Spindel 9 verschwenkbar angeordnet, sodass die Lage der Bernoullischeibe 13 relativ zur Schleifscheibe 7 verändert werden kann, um die jeweils optimale Relativlage zwischen Tastvorrichtung 11 in Form der Bernoullischeibe 13 einerseits und dem Werkzeug, im gezeigten Beispiel die Schleifscheibe 7, andererseits herbeiführen zu können.

Eine vorteilhafte Begleiterscheinung der Tastvorrichtung 11 in Form der Bernoullischeibe 13 ist es, dass allfällige Schwingungen der Glasscheibe 5 im Bereich der Schleifscheibe 7 gedämpft werden, sodass sich diese nicht nachteilig auswirken können.

Die Relativlage quer zur Ebene (Fläche) des Werkstückes 5 zwischen der Tastvorrichtung einerseits und dem Werkzeug 7 andererseits bezogen auf die Ebene des zu bearbeitenden Werkstückes 5 - im gezeigten Ausführungsbeispiel die Glasscheibe 5 - ist beispielsweise veränderbar (einstellbar), bleibt aber während eines Bearbeitungsvorganges konstant. So kann die erfindungsgemäße Anordnung 1 an unterschiedliche Werkzeuge 7 und/oder unterschiedliche Werkstücke 5 angepasst werden.

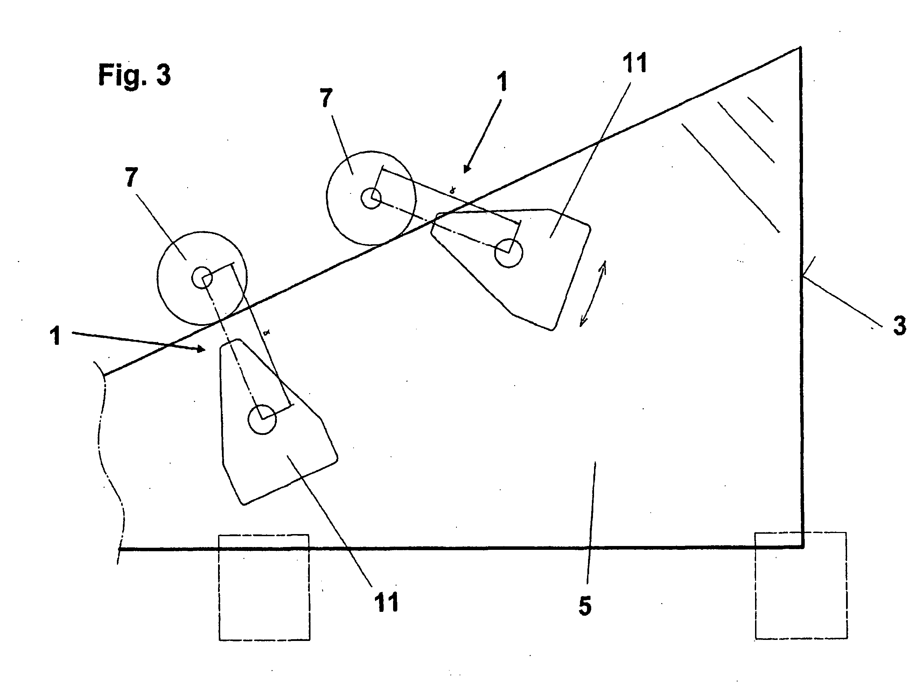

In Fig. 3 ist schematisch angedeutet, wie die erfindungsgemäße Anordnung 1 mit der Tastvorrichtung 11 und dem Werkzeug 7 (Schleifscheibe) entlang des Randes 3 einer Glasscheibe 5 bewegt werden kann. Fig. 3 zeigt insbesondere auch, dass die Relativlage zwischen der Tastvorrichtung 11 und dem Werkzeug 7 durch Verschwenken der Tastvorrichtung 11 um die Achse des Werkzeuges 7 jeweils so gewählt werden kann, dass die dem Werkzeug 7 zugeordnete Aufgabe optimal erfüllt werden kann. Dies erlaubt es auch, wie im gezeigten Beispiel von Fig. 3, Werkstücke (Glasscheiben 5) mit von der rechteckigen Form abweichendem Verlauf der Ränder 3 ordnungsgemäß zu bearbeiten.

## Patentansprüche

1. Anordnung (1) zum Führen von Werkzeugen (7) entlang des Randes (3) von plattenförmigen Werkstücken (5) mit einer Tastvorrichtung (11), die mit dem Werkzeug (7) quer zur Ebene des Werkstückes (5) verstellbar ist, wobei die Tastvorrichtung (11) von dem Werkstück (5) einen konstanten Abstand einnimmt, **dadurch gekennzeichnet, dass** die Tastvorrichtung (11) eine Bernoullischeibe (13) aufweist und dass in der dem Werkstück (5) zugekehrten Fläche (15) der Bernoullischeibe (13) eine ringförmige Düse (17) für den Austritt von Fluid, insbesondere von Wasser, vorgesehen ist.

2. Anordnung nach Anspruch 1, **dadurch gekennzeichnet, dass** die Tastvorrichtung (11) von einer Großfläche des plattenförmigen Werkstückes (5) einen definierten Abstand einnimmt.

3. Anordnung nach Anspruch 1 oder 2, **dadurch gekennzeichnet, dass** die Tastvorrichtung (11) um das Werkzeug (7) herum verschwenkbar gelagert ist.

4. Anordnung nach einem der Ansprüche 1 bis 3, **dadurch gekennzeichnet, dass** das Werkzeug (7) eine Schleifscheibe ist und dass die Tastvorrichtung (11) um die Achse der Schleifscheibe (7) verschwenkbar gelagert ist.

5. Anordnung nach einem der Ansprüche 1 bis 4, **dadurch gekennzeichnet, dass** Antriebe vorgesehen sind, um die Anordnung, insbesondere das in der Anordnung vorgesehene Werkzeug (7), entlang des Randes (3) eines Werkstückes (5) zu bewegen.

6. Anordnung nach Anspruch 5, **dadurch gekennzeichnet, dass** eine Halterung für das Werkstück (5) vorgesehen ist, deren Antrieb zum Bewegen in horizontaler Richtung eingerichtet ist, und dass dem Werkzeug (7) mit der Tastvorrichtung (11) ein zum Bewegen in vertikaler Richtung eingerichteter Antrieb zugeordnet ist.

## Claims

1. Arrangement (1) for guiding tools (7) along the edges (3) of plate-shaped workpieces (5) a feeler device (11) that with the tool (7) is adjustable transverse to the plane of the workpiece (5) whereby the feeler device (11) maintains a constant distance from the workpiece (5), **characterized in that** the feeler device (11) has a Bernoulli disk (13) and **in that** on the surfache (15) of the Bernoulli disk (13) that faces the workpiece (5), a ring-shaped jet (17) is provided for the discharge of fluid, especially water.

2. Arrangement according to Claim 1, **characterized in that** the feeler device (11) maintains a defined distance from a major surface of the plate-shaped workpiece (5).

3. Arrangement according to Claim 1 or 2, **characterized in that** the feeler device (11) is mounted to be able to pivot around the tool (7).

4. Arrangement according to one of Claims 1 to 3, **characterized in that** the tool (7) is a grinding wheel and wherein the feeler device (11) is mounted to be able to pivot around the axis of the grinding wheel (7).

5. Arrangement according to one of Claims 1 to 4, **characterized in that** drives are provided in order to move the arrangement, especially the tool (7) that is provided in the arrangement, along the edge (3) of a workpiece (5).

6. Arrangement according to Claim 5, **characterized in that** a mounting for the workpiece (5) is provided whose drive is designed to move in the horizontal direction, and **in that** a drive that is designed to move in the vertical direction is assigned to the tool (7) with the feeler device (11).

## Revendications

1. Agencement (1) destiné à guider des outils (7) le long du bord (3) de pièces (5) en forme de plateau, comprenant un dispositif de palpage (11) qui peut être réglé avec l'outil (7) transversalement au plan de la pièce (5), sachant que le dispositif de palpage (11) se place à un écart constant d'avec la pièce (5), **caractérisé en ce que** le dispositif de palpage (11) présente un disque de Bernoulli (13) et que dans la surface (15) du disque de Bernoulli (13) tournant le dos à la pièce (5), une douille annulaire (17) est prévue pour la sortie d'un fluide, en particulier de l'eau.

2. Agencement selon la revendication 1, **caractérisé en ce que** le dispositif de palpage (11) se place à un écart défini d'avec une grande surface de la pièce (5) en forme de plateau.

3. Agencement selon la revendication 1 ou 2, **caractérisé en ce que** le dispositif de palpage (11) est disposé en pouvant pivoter autour de l'outil (7).

4. Agencement selon l'une des revendications 1 à 3, **caractérisé en ce que** l'outil (7) est un disque de meulage et que le dispositif de palpage (11) est disposé en pouvant pivoter sur l'axe du disque de meulage (7).

5. Agencement selon l'une des revendications 1 à 4, **caractérisé en ce que** des entraînements sont prévus pour déplacer l'agencement, en particulier l'outil (7) prévu dans l'agencement, le long du bord (3) d'une pièce (5).

6. Agencement selon la revendication 5, **caractérisé en ce qu'**une fixation pour la pièce (5) est prévue, dont l'entraînement est disposé pour le mouvement dans le sens horizontal, et qu'un entraînement disposé pour le déplacement dans le sens vertical est attribué à l'outil (7) comprenant le dispositif de palpage (11).
